# EUROPEAN PATENT SPECIFICATION

(11) **EP 2 389 738 B1**
(45) Date of publication and mention of the grant of the patent: **12.08.2015**
(21) Application number: 10704189.9
(22) Date of filing: 19.01.2010
(51) Int. Cl.: H04J 3/06, H04J 3/16, H04Q 11/00

(54) **METHODS AND SYSTEMS FOR DYNAMIC EQUALIZATION DELAY PASSIVE OPTICAL NETWORKS**
VERFAHREN UND SYSTEME FÜR PASSIVE OPTISCHE NETZE MIT DYNAMISCHER AUSGLEICHSVERZÖGERUNG
PROCÉDÉS ET SYSTÈMES POUR DES RÉSEAUX OPTIQUES PASSIFS À RETARD D'ÉGALISATION DYNAMIQUE

(30) Priority: 20.01.2009 US 356323
(43) Date of publication of application: 30.11.2011
(73) Proprietor: Telefonaktiebolaget L M Ericsson (publ), 164 83 Stockholm (SE)
(72) Inventor: GORDON, David, Montreal, Québec H4L 5P4 (CA); BELIVEAU, Ludovic, San Jose, California 95134 (US); JULIEN, Martin, Laval, Québec H7P 5H1 (CA); BRUNNER, Robert, Montreal, Québec H3N 2C1 (CA)
(74) Representative: Röthinger, Rainer
(86) International application number: PCT/IB2010/050238
(87) International publication number: WO 2010/084456

(56) References cited:
- EP-A1- 2 043 286
- US-B1- 6 665 315
- "Gigabit-capable Passive Optical Networks (G-PON): Transmission convergence layer specification; G.984.3 (03/08)" ITU-T STANDARD, INTERNATIONAL TELECOMMUNICATION UNION, GENEVA ; CH, no. G.984.3 (03/08), 29 March 2008 (2008-03-29), XP017433831

## Description

### TECHNICAL FIELD

The present invention relates generally to telecommunications systems and in particular to methods and systems for improving protocol efficiency in passive optical networks.

### BACKGROUND

Communications technologies and uses have greatly changed over the last few decades. In the fairly recent past, copper wire technologies were the primary mechanism used for transmitting voice communications over long distances. As computers were introduced the desire to exchange data between remote sites became desirable for many purposes. The introduction of cable television provided additional options for increasing communications and data delivery from businesses to the public. As technology continued to move forward, digital subscriber line (DSL) transmission equipment was introduced which allowed for faster data transmissions over the existing copper phone wire infrastructure. Additionally, two way exchanges of information over the cable infrastructure became available to businesses and the public. These advances have promoted growth in service options available for use, which in turn increases the need to continue to improve the available bandwidth for delivering these services, particularly as the quality of video and overall amount of content available for delivery increases.

One promising technology that has been introduced is the use of optical fibers for telecommunication purposes. Optical fiber network standards, such as synchronous optical networks (SONET) and the synchronous digital hierarchy (SDH) over optical transport (OTN), have been in existence since the 1980s and allow for the possibility to use the high capacity and low attenuation of optical fibers for long haul transport of aggregated network traffic. These standards have been improved upon and today, using OC-768/STM-256 (versions of the SONET and SDH standards respectively), a line rate of 40 gigabits/second is achievable using dense wave division multiplexing (DWDM) on standard optical fibers.

In the access domain, information regarding optical networking can be found in Ethernet in the First Mile (EFM) standards supporting data transport over point-to-point (p2p) and point-to-multipoint (p2mp) optical fiber based access network structures. Additionally the International Telecommunications Union (ITU) has standards for p2mp relating to the use of optical access networking, e.g., **ITU-T** G.984. Networks of particular interest for this specification are passive optical networks (PONs). Three PONs are, e.g., Ethernet PONs (EPONs), broadband PONs (BPONs) and gigabit capable PONs (GPONs), characteristics of which are displayed below for comparison in Table 1.
Table 1 - Major PON Technologies and Properties
[Table 1]

**[Table]**

| Characteristics | EPON | BPON | GPON |
|---|---|---|---|
| Standard | IEEE 802.3ah | ITU-T G.983 | ITU-T G.984 |
| Protocol | Ethernet | ATM | Ethernet |
| Rates (Mbps) | 1244 up / 1244 down | • 622/1244 down | • 1244/2488 down |
| | | • 155/622 up | • 155 to 2488 up |
| Span (Km) | 10 | 20 | 20 |
| Number of Splits | 16 | 32 | 64 |

PON efficiency can be affected by numerous things, for example, transmit power, distance, traffic volume, quality of equipment, quiet windows, etc. While there is often
a tradeoff between cost and efficiency, efficiency improvements can reduce the overall
cost of a system, particularly when considered over time. Another factor that can affect
PON efficiency is the number of optical network units (ONUs) supported by each optical line termination (OLT) in the PON. The more ONUs per OLT in a PON, the more splitting of the optical signal (which increases the link budget) and the more control signaling that is typically required, which leads to more inefficiencies in the desired data transfers. As this technology matures, PONs could scale from 32 ONUs per OLT to possibly, 64, 128 or more per OLT, particularly if these ONUs are located relatively close to their OLT e.g., within 20 kilometers. As such, decreasing the likelihood of inefficiencies in PONs is addressed by the present invention.

"Gigabit-capable Passive Optical Networks (G-PON): Transmission convergence layer specification; G.984.3 (03/08)" ITU-T STANDARD, INTERNATIONAL TELECOMMUNICATION UNION, GENEVA, may be construed to disclose the transmission convergence layer for gigabit-capable passive optical networks (PONs), which are a family of flexible access networks capable of providing a range of broadband and narrow-band services, operating at the rates of 2.48832 Gbit/s downstream, and 1.24416 or 2.48832 Gbit/s upstream. The document includes the specifications of gigabit PON transmission convergence (GTC) layer framing, upstream time division multiple access mechanism, physical layer OAM messaging channel, principles and signalling mechanism of the upstream dynamic bandwidth assignment, ONU activation method, forward error correction, and security.

EP 2 043 286 A1 constitutes prior art under Article 54(3) EPC and relates to a method to equalize message delays in a passive optical network.

### SUMMARY

System and method according to the independent claims appended herein address this need and others by providing features that allow for improvements in PONs. Developments are recited in the dependent claims.

A method for controlling equalization delay
in a passive optical network (PON) may include: determining that a maximum distance
between any one of a plurality of first nodes in the PON and a second node in the PON
has changed; and transmitting an equalization delay change message to the plurality of first nodes.

A communications node for controlling equalization delay in a passive optical network (PON) may include: a processor for determining that a maximum distance between any one of a plurality of first nodes in the PON and the communications node in the PON has changed; and a communications interface for transmitting an equalization delay change message to the plurality of first nodes.

### BRIEF DESCRIPTION OF THE DRAWINGS

The accompanying drawings illustrate exemplary embodiments, wherein:
FIG. 1 depicts a Gigabit Passive Optical Network (GPON);
FIG. 2 illustrates Optical Network Units (ONUs) using a time division multiple access (TDMA) scheme;
FIG. 3 is a flowchart providing a general overview of an ONU activation process;
FIG. 4 illustrates timing for an Optical Line Termination (OLT) and an ONU;
FIG. 5 depicts a Ranging_Time message;
FIG. 6 shows a Ranging_Time message according to exemplary embodiments;
FIG. 7 illustrates a timing change according to exemplary embodiments;
FIG. 8 shows a flowchart illustrating steps associated with adding a new ONU at a new farthest distance to a PON according to exemplary embodiments;
FIG. 9 depicts a method flowchart illustrating steps associated with dropping an ONU from a PON creating a new farthest distance according to exemplary embodiments;

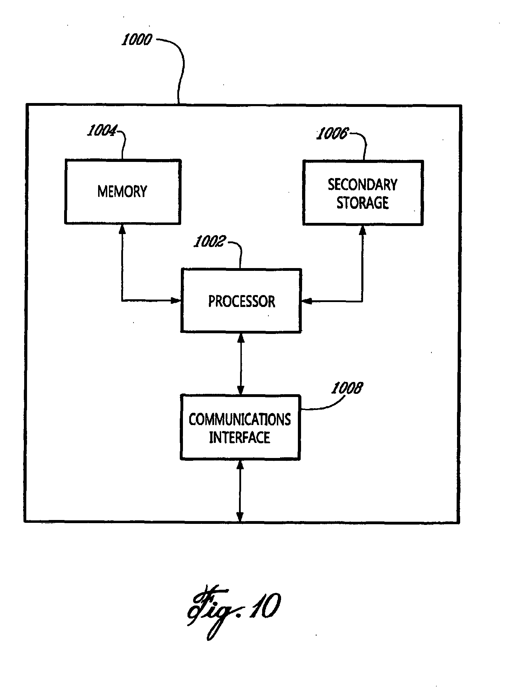

FIG. 10 shows a communications node according to exemplary embodiments; and
FIG. 11 depicts a method flowchart for implementing a zero-distance equalization delay in a PON according to exemplary embodiments.

### DETAILED DESCRIPTION

The following detailed description of the exemplary embodiments refers to the accompanying drawings. The same reference numbers in different drawings identify the same or similar elements. Also, the following detailed description does not limit the invention. Instead, the scope of the invention is defined by the appended claims.

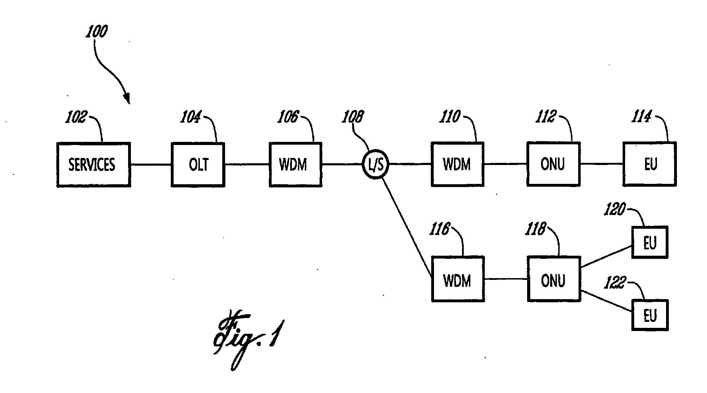

According to exemplary embodiments it is desirable to provide mechanisms and methods that allow for improving the efficiency of a passive optical network (PON). In order to provide some context for this discussion, an exemplary Gigabit-capable PON (GPON) is shown in FIG. 1. While a GPON is used as the basis of discussion herein, other types of PONs, e.g., Ethernet PONs (EPONs) and broadband PONs (BPONs), could benefit from the exemplary embodiments described below with minor variations as would be understood by one skilled in the art.

According to exemplary embodiments, GPON 100 in Figure 1 shows elements of an optical distribution network (ODN) that interact with various endpoints of an optical network unit (ONU). As shown in Figure 1, one or more service providers or types 102 can be in communication with an optical line termination (OLT) 104, which is typically located in a central office (CO) (not shown). The OLT 104 provides the network side interface and is typically in communication with at least one ONU 112, 118 (or an optical network termination (ONT) which performs similar functions as an ONU). These service providers 102 can provide a variety of services such as video-on-demand or high definition television (HDTV), Voice over IP (VoIP) and high speed internet access (HSIA). The OLT 104 transmits information to multiplexer 106 which multiplexes the data and transmits the data optically to a passive combiner/splitter 108. The passive combiner/splitter 108 then splits the signal and transmits it to the upstream multiplexers 110 and 116. The multiplexers 110 and 116 demultiplex the signal and forward it on to their respective ONUs 112 and 118. These multiplexers (108, 110 and 116) are typically integrated into both the OLT and the ONUs and are used for placing and extracting the upstream and downstream wavelengths depending upon their locations in the optical network. These ONUs 112 and 118 then forward the information onto their respective end users (EU) 114, 120 and 122, e.g., devices such as a computer, a television, etc.

It will be understood by those skilled in the art that this purely illustrative GPON 100 can be implemented in various ways, e.g., with modifications where different functions are combined or performed in a different manner. For example the multiplexers (108, 110 and 116) typically are duplexers, but if an additional signal is being transmitted, e.g., a cable-television signal in a GPON 100, they can act as triplexers. Additionally in the upstream direction, the optical signal would typically have a different wavelength from the downstream signal and use the same multiplexers 106, 110 and 116, which have bidirectional capabilities.

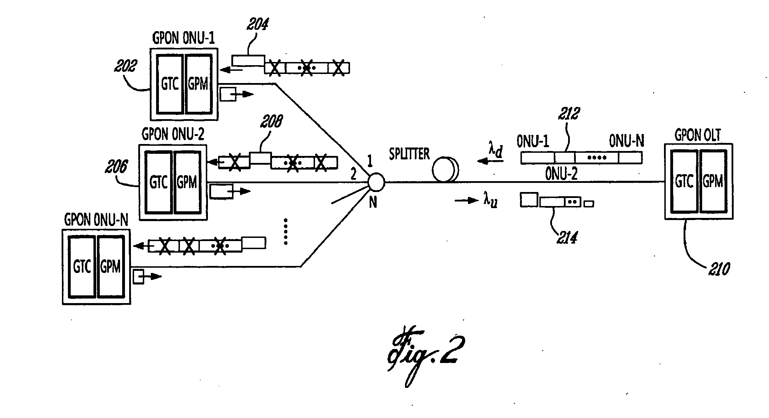

In the upstream direction, a TDMA scheme (e.g., as shown in Figure 2) is used in a PON where ONUs 202 and 206 are allowed to transmit data in granted time-slots on their optical wavelength(s). This means that ONUs 202, 206 transmit in a burst mode at their allotted time slots, as compared to a 125 µs long frame 212 in the downstream direction from the OLT 210. Since the ONUs 202, 206 are located at different distances from the OLT 210, the ONTs 202, 206 are informed by the OLT 210 when, and with what power, to transmit their respective bursts so that the ONUs signals are arriving in an aligned time structure at the OLT 210. For example, the OLT 210 transmits a 125 µs long frame 212 which is composed of a GTC header and a GTC payload. The GTC Payload typically contains a sequence of GEM Headers and GEM Payloads, with the GEM Header containing information identifying the destination ONU, e.g., the ONU-ID, and the GEM Payload containing the desired data. While it is shown in Figure 2 that each ONU 202, 206 is receiving a single GEM Header/Payload segment within the frame 212 in sequential order, it is possible for an ONU 202, 206 to receive multiple GEM header/Payload segments within a single downstream frame 212 in whatever order the OLT 210 decides to use since each ONU can filter the downstream data based, e.g., on its assigned ONU-ID. Based on the received data the ONUs know their transmission time slot which results in an upstream message 214 where the different ONU outputs are in a time sequential order. Each of the ONUs 202, 206 and the OLT 210 may include various protocol stack processing entities including, for example, a GPON transmission convergence (GTC) processing entity and a GPON physical medium (GPM) processing entity. More information regarding GTC and GPM can be found in ITU-T G.984.3 which is incorporated herein by reference.

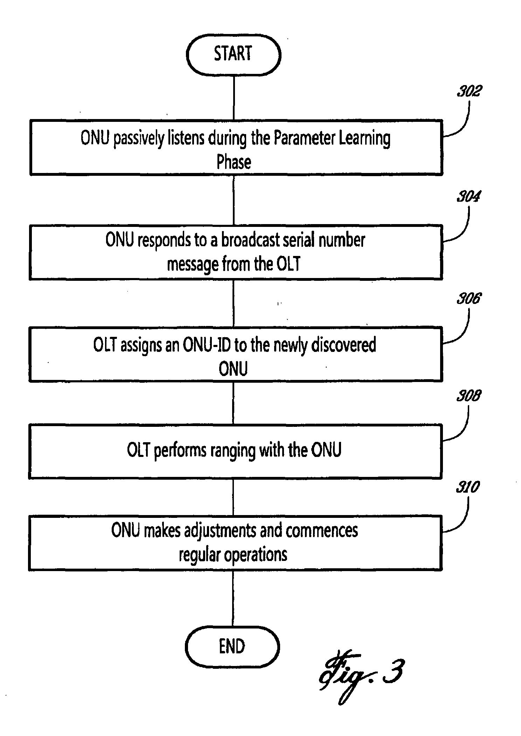

Based upon the exemplary PON described above, a general description of the activation phase between an ONU 202, 204 and the OLT 210 which supports exemplary embodiments will now be described with respect to Figure 3, which is a high level flowchart which shows steps performed during the setup of an ONU 202 in a PON. This activation process is performed under the control of the OLT 210 through the exchange of messages with the various ONUs as they come online. Initially, the ONU 202 passively listens to messages sent by the OLT 210 during the Parameter Learning phase in step 302. The ONU 202 then notifies the OLT 210 of its presence by responding to a broadcast serial number message from the OLT 210 in step 304. The OLT 210 assigns an ONU-ID to the newly discovered ONU 202 in step 306, followed by the OLT 210 performing ranging with the ONU 202 in step 308. During the ranging step 308, the OLT 210 computes the equalization delay (EqD) for the ONU 202 and communicates this value to the ONU 202 in a Ranging_Time message. The ONU 202 then makes adjustments as instructed (and/or needed) and commences regular operations in step 310.

As described above, ONUs 202, 206 can be discovered by the OLT 210. This can occur via an auto discovery process, e.g., when the PON is first turned on, through preconfigured ONUs informing the OLT 210 of their presence when they are added to the network, or some combination of the two. Auto discovery can be turned off after an OLT 210 initially discovers all ONUs in the PON at startup. Additionally, according to exemplary embodiments, the auto discovery feature of the OLT 210 can be turned back on either manually, or at pre-set times for pre-set durations as desired. This would enable the PON to have new ONUs added (which could be initially configured in a conventional manner with an absolute equalization delay which could then be modified in the future by the ranging process), which will then be discovered and activated during a future auto discovery window, as well as discovering ONUs which have dropped from the PON as needed, e.g., due to scheduled updates, desired reconfig-urations of the PON, failure and the like. Other triggers in addition to or as an alternative to a pre-set time for turning the auto-discovery feature on could be used for triggering the discovery process by OLT 210.

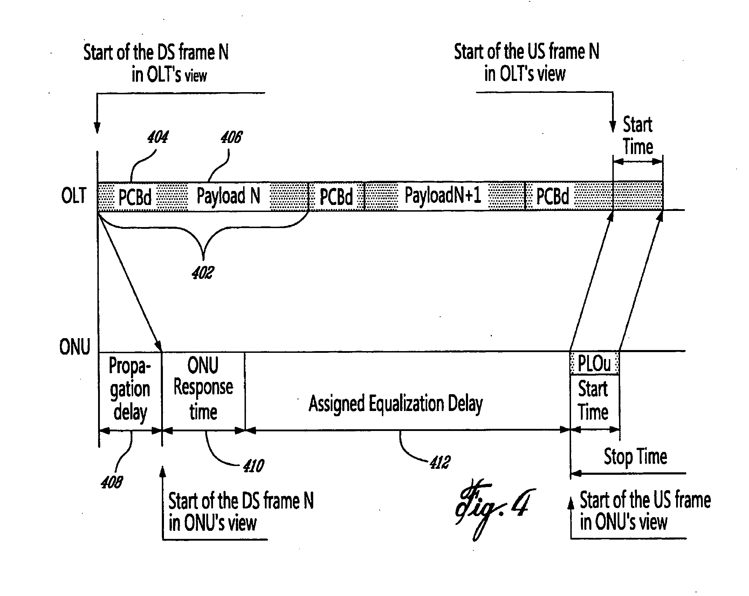

As described above, during a typical setup process, an OLT 210 transmits a Ranging_Time message which includes the equalization delay (EqD) to the ONU 202. This EqD is needed due to signal propagation delay associated with the optical fiber, i.e., simultaneous transmissions from multiple ONUs located at different distances from an OLT 210 would reach the OLT 210 at different times. Hence an EqD is typically introduced to delay the transmission of ONUs located closer to the OLT 210 more than transmissions of the ONU located at the farthest distance. This delay is used to synchronize the transmissions of the various ONUs 202, 206 with the transmissions of the furthest ONU from the OLT 210 in the context of the TDM/TDMA transmission schemes described above. This allows for an orderly transmission of data from the ONUs 202, 206 which can be useful for reducing potential frame collisions. Equalization delay will now be described with respect to Figure 4.

Figure 4 shows an OLT 210 transmitting a downstream (DS) frame 402 which includes a Physical Control Block (PCBd) header 404 (d denotes downstream) and a payload N 406 to the ONU 202. Additionally, various delays involved are used to determine when the ONU 202 can respond to the frame 402 received from the OLT 210. These delays can include, a propagation delay 408, the ONU response time 410, and the assigned EqD 412. The propagation delay 408 is based on the physical distance of the ONU 202 from the OLT 210, the ONU response time 410 is the processing time that the ONU 202 uses to generate a response (typically 35 +/-1 microsecond), and the assigned EqD 412 is a value received in the Ranging_Time message to delay this particular ONU's response such that all ONUs transmit from the same logical distance. Conventionally, this logical distance will not change during the operation of a PON and each ONU 202, 206 will have assigned to it a specific equalization delay which is a function of its physical distance from the OLT 210, which will create a normalized logical distance when transmitting. This allows for the various upstream and downstream communications to be properly timed, e.g., to avoid collisions. However, if, for example, an ONU enters or leaves the PON which alters the distance of the farthest ONU from the OLT 210, then there could be unnecessary or inaccurate delays introduced into the transmissions within the PON.

For example, if an ONU located 30 km from its OLT 210 is added to a GPON which was initially configured for ONUs having a maximum distance of 20 km from the OLT 210, then the previously assigned equalization delays may be too small for optimal performance. Likewise, if an ONU located at 20 km from its OLT 210 is removed from service, leaving the farthest ONU remaining in the system at 15 km from the OLT 210, then the previously assigned equalization delays may be too large for optimal per-formance. Accordingly, systems and methods for reducing this delay and improving the PON efficiency will be described below.

According to exemplary embodiments a dynamic equalization delay can be used to achieve a higher efficiency in a PON. When the PON topology changes such that the maximum distance from an ONU to the OLT 210 changes, then the equalization delay can be modified to compensate for the farthest ONU, rather than assuming (and using) a static value which may not correspond to the farthest ONU in the PON. Dynamic equalization delays can be determined by, for example, calculating the distance of a newly-added, ONU through the above described ranging process. Alternatively, if an ONU is removed from the system, then the OLT 210 can check to see if it was the only ONU disposed at the maximum distance. If not, then no change to the equalization delays needs to be made. If so, then the OLT 210 can determine the new "farthest" ONU either by consulting previously stored ranging values from initial system setup or by performing the ranging process once again.

As described above, the OLT 210 can determine the distance of the furthest ONU through the ranging process. According to exemplary embodiments, the zero-distance equalization delay is dynamically set to equal the delay associated with the furthest located ONU. This allows the system to fully optimize delays in PON transmissions, e.g., reduce unnecessary delays due to using an incorrect (or non revised) furthest ONU distance. Therefore the zero-distance equalization delay is equal to the propagation time (round trip) from OLT 210 to the furthest ONU plus the ONU response. In other words, the zero-distance equalization delay is the corresponding delay time from transmitting a downstream frame from the OLT 210 until the OLT 210 sees the corresponding upstream frame. Since the assigned equalization delays for the ONUs are calculated as a function of the zero-distance equalization delay implementing adjustments to the assigned EqD also needs to be considered whenever the zero-distance equalization delay is dynamically updated, e.g., when a new "farthest" ONU is detected in the PON by the OLT 210.

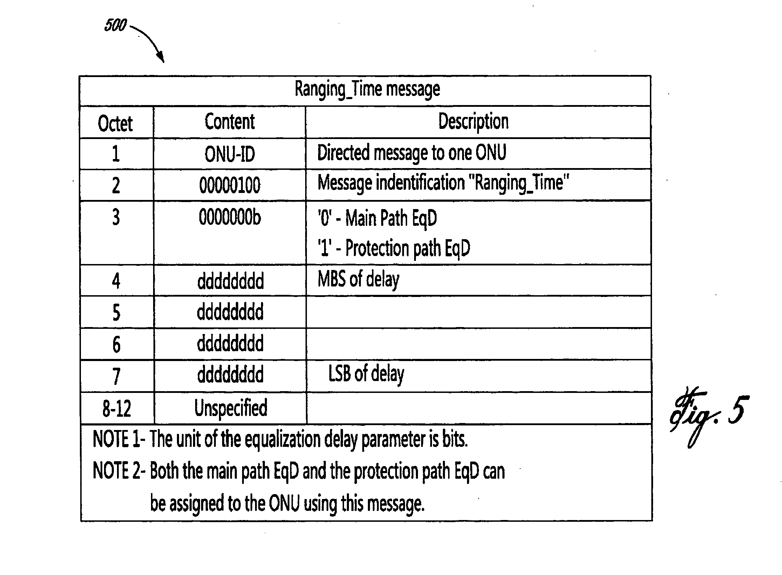

According to this exemplary embodiment, the method by which an OLT 210 informs all of the ONUs 202, 206 of their assigned equalization delay is by sending a Ranging_Time message to an ONU which includes the EqD. This message is received by each ONU 202, 206 in the PON. As an example, Ranging_Time message 500 from ITU-T G.984.3 is shown in Figure 5, although it will be appreciated that the present invention is not limited to the usage of Ranging_Time messages. According to exemplary embodiments, the EqD for each ONU 202, 206 in the PON can be dy-namically updated by sending (e.g., broadcasting) a single Ranging_Time message which includes an EqD delta or change value usable by each ONU in the PON to update its previously assigned EqD. This EqD delta value represents the change between the originally calculated zero-distance equalization delay and the new zero-distance equalization delay based upon the new farthest ONU. Additionally, according to an exemplary embodiment, the broadcasted message is intended to reach the ONUs 202, 206 on only one wavelength, even though the OLT 210 is typically able to transmit on multiple wavelengths to ONUs 202, 206 which are typically able to receive on multiple wavelengths. In other words, the broadcasted message is wavelength specific and not fiber (or physical medium) specific.

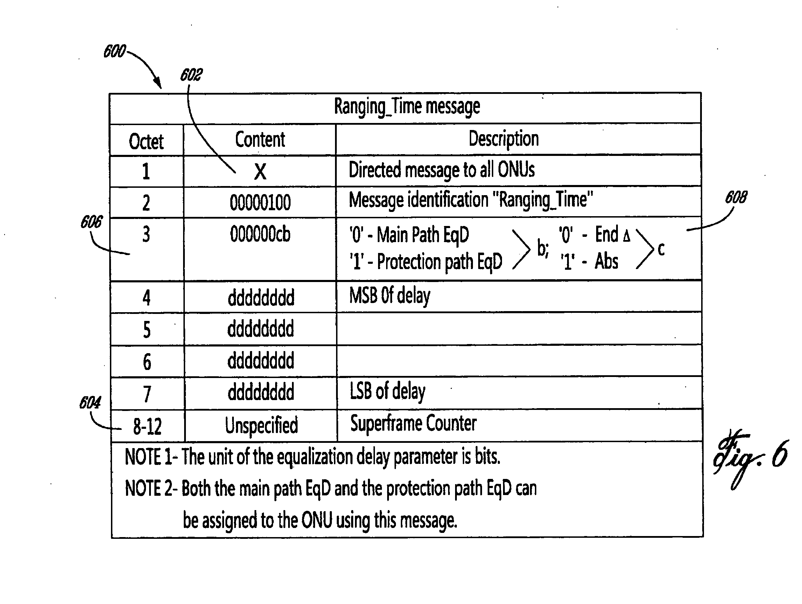

According to one exemplary embodiment, the Ranging_Time message 500 of Figure 5 can be modified to carry the EqD delta value such that all of the ONUs 202, 206 in the PON know to read the contents of the message. More specifically, but purely as an illustration, the Ranging_Time message 500 can be modified to include extra information in support of broadcasting change information associated with the zero-distance equalization delay as shown in Figure 6. Therein, in modified Ranging_Time message 600, the information in the first octet denoted by "x" 602 can take any value that would allow all of the ONUs 202, 206 in the PON to understand that they should read and apply the contents of the message as needed, i.e., a value which identifies this message as a broadcast message as opposed to a unicast message, e.g., using the value 255 (as described using binary) in the ONU-ID field which all ONUs 202, 206 know to read. Alternatively, other methods can be used such that all of the ONUs 202, 206 in the PON know to use the contents of the Ranging_Time message 600 (or an equivalent message), e.g., inclusion of a broadcast flag in the message. Additionally, in order to account for the random variation in processing time in each ONU 202, 206, the Ranging_Time message 600 could specify the time, e.g., as a superframe counter value, at which the EqD delta is to take effect. For example, the last five bytes (octets 8-12) 604 of Ranging_Time message 600 can be used to specify the superframe counter value at which the EqD is to be implemented for synchronization purposes.

Additionally, bit number 2 of byte number 3 606 could be used as a bit flag to indicate whether the Ranging_Time message 600 contains an EqD delta value or an absolute equalization delay (described in the description field 608). Alternatively, the value could be an absolute equalization delay when the Ranging_Time message 600 is transmitted for a specific ONU, e.g., the ONU-ID field has a value identifying a single ONU, and the value could be an EqD delta value when the Ranging_Time message 600 is transmitted as a broadcast message. Note that the farthest ONU from the OLT 210 may be aware that it is the farthest ONU from the OLT 210 and, in such a case, will not need to apply the EqD delta value and instead will use its assigned EqD (i.e., absolute) and set the EqD delta value to 0. Alternatively, according to exemplary embodiments, other methods can use both the assigned EqD value and the EqD delta value in the farthest ONU to establish its current EqD value. For example, the new ONU could be configured in the typical manner, i.e., using the unicast Ranging_Time message for the new ONU which includes a value for the EqD being the desired value minus the EqD delta. The broadcast Ranging_Time message could then be transmitted which includes the EqD delta value for all ONUs, and this farthest ONU could then apply the EqD in the same manner that the other ONUs do. In another example, during a discovery period when the OLT 210 would receive the response for the second Serial_Number ONU from the newly discovered ONU, the OLT 210 notices that this ONU is the new farthest ONU. The OLT 210 would then transmit the new EqD delta value to all of the ONUs in the PON prior to the activation of the new farthest ONU. The new farthest ONU would discard this message since it has not been activated yet. After activation of the new farthest ONU, the OLT 210 would then send the unicast Ranging_Time message with the EqD value to the new farthest ONU. Additionally, the new farthest ONU would know to set its EqD delta value to zero.

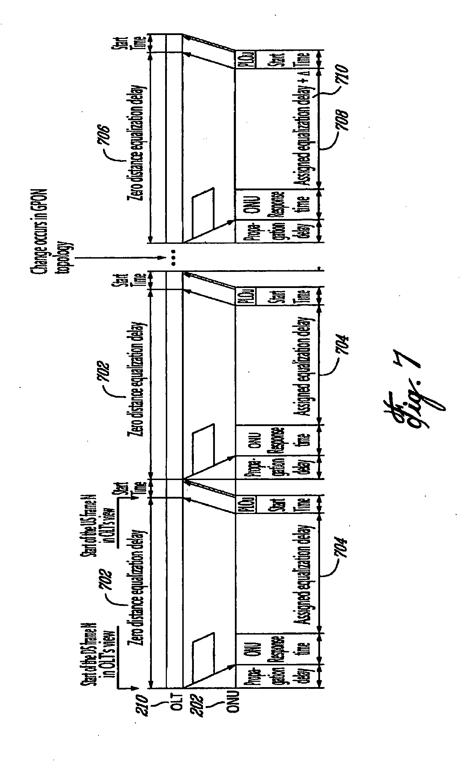

Figure 7 shows signaling in a PON with an established zero-distance equalization delay 702 and assigned equalization delay 704 that has a change in topology, i.e., a new farthest ONU distance, which results in a new zero-distance equalization delay 706 (calculated by OLT 210) as well as a change to the assigned equalization delay 708 as shown by the EqD delta (triangle symbol) 710.

As described above, according to exemplary embodiments, the superframe counter which can be used for synchronization can be sent as part of Ranging_Time message 600. According to other exemplary embodiments, other methods can be used to support the synchronization of the ONUs 202, 206 for implementing the zero-distance equalization delay delta. For example, the desired superframe counter value (n) can be sent out by the OLT 210 during the set-up process for activating an ONU to the PON as one of the set-up messages which delivers parameters to the ONU. Alternatively, other methods for synchronization could be used, e.g., a default value or timing could be predetermined and stored in the ONUs 202, 206 such that received EqD delta values would be implemented a certain number of superframes after receipt where the superframe counter value is n=1, 2, 3..., where n is an integer value , or a timing value which can be translated by the ONUs into the desired superframe counter number n (or equivalent) for use in synchronization.

From the foregoing it will be appreciated that, as a result of the addition or removal of an ONU 202, 206 in the PON according to exemplary embodiments, there are at least two scenarios which could cause the OLT 210 to generate a single Ranging_Time message 600 which is broadcast to all of the ONUs 202, 204 for updating the EqD according to these exemplary embodiments. While two specific scenarios are described below, according to exemplary embodiments there can be other scenarios when a single Ranging_Time message 600 is transmitted, e.g., any time a new ONU is added to the PON or for transmitting an EqD delta value of zero. The first scenario is for an increase to the zero-distance equalization distance due to the addition of an ONU which is now the farthest from the OLT 210 and the second scenario is for a decrease to the zero-distance equalization distance due to the removal of the ONU which was the farthest from the OLT 210. Additionally, for any given Ranging_Time message 600 that is transmitted, that Ranging_Time message 600 is typically sent 3 times to make sure that the message is not lost on the way to the ONUs 202, 204. Thus, according to exemplary embodiments, there can be provided a mechanism which coordinates application of the latest EqD delta value received at a particular superframe, e.g., in order to avoid applying the delta value more than once for the update.

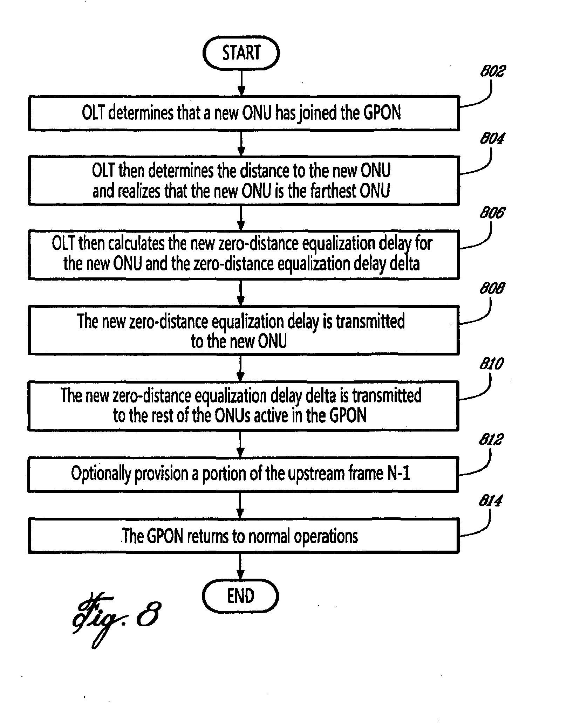

According to exemplary embodiments, in the first case for an increase to the zero-distance equalization distance, the assigned EqD for all ONUs 202, 206 will increase and the increase will be transmitted, as described above, in the Ranging_Time message 600. Since the EqD of the ONUs 202, 206 will increase, the ONUs 202, 206 will transmit more slowly, i.e., after longer delay but at the same bit rate, in the upstream frame N following the downstream frame N ordering the reduction adjustment. Regarding frame collision potential, no action needs to be taken since there will be no collision between the upstream frames N and N-1, however there could be a time period of upstream transmission that could be provisioned and used by upstream frame N-1. This time period is generally equivalent to the EqD delta increase. An exemplary flowchart showing an example of this scenario is described below with respect to Figure 8.

Initially a GPON with an OLT 210 and multiple ONUs 202, 204 is active and operational. The OLT 210, using methods described above, determines that a new ONU has joined the GPON in step 802. The OLT 210 then determines the distance to the new ONU and realizes that the new ONU is the farthest ONU in step 804. The OLT 210 then calculates the new zero-distance equalization delay for the new ONU and the zero-distance equalization delay delta in step 806. The new zero-distance equalization delay is transmitted to the new ONU in step 808 and the new zero-distance equalization delay delta is transmitted to the rest of the ONUs active in the GPON in step 810. Then, optionally provision a portion of the upstream frame N-1 in step 812. The portion of the upstream frame N-1 which can be provisioned, i.e., contain data, needs to be transmittable in a time frame equal to or less than the time of the new zero-distance equalization delta amount. At this point the GPON returns to normal operations in step 814.

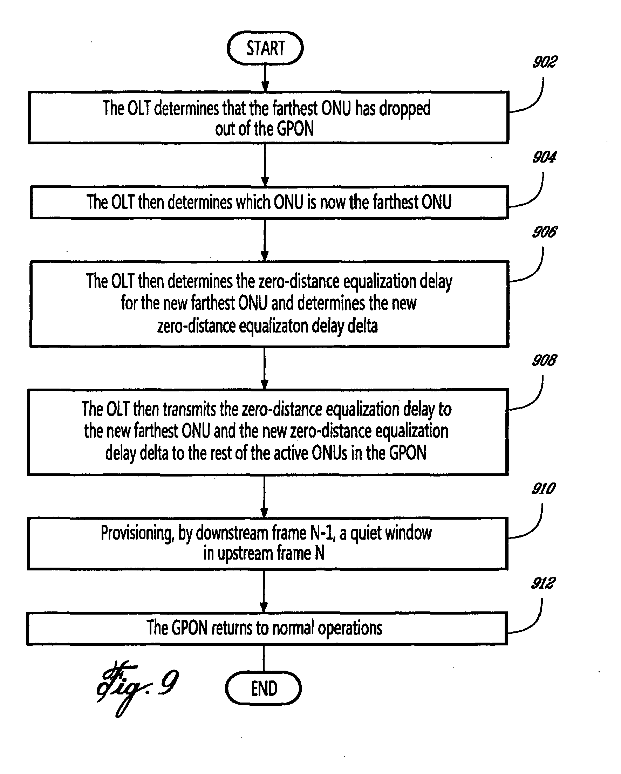

According to another exemplary embodiment, in the second case for a decrease to the zero-distance equalization distance, the assigned EqD for all ONUs 202,206 will decrease and the decrease will be transmitted, as described above, in the Ranging_Time message 600. This can occur when, for example, during a pre-planned reconfiguration the current farthest distance ONU is removed from the PON. Since the EqD delta is a decrease, the ONUs 202, 206 will transmit faster, i.e., after a shorter delay but at the same bit rate, in the upstream frame N following the downstream frame N ordering the reduction adjustment. However, without making some type of adjustment, this could result in upstream frame N colliding with upstream frame N-1. Therefore, a time period of no upstream transmission, i.e., a quiet window, is implemented in upstream frame N-1 corresponding to the reduction of the zero-distance equalization distance, e.g., the EqD delay delta. Additionally, downstream frame N-1 provisions this quiet window which makes the equalization delay adjustment a two frame process. An exemplary flowchart showing an example of this scenario is described below with respect to Figure 9.

Initially a GPON with an OLT 210 and multiple ONUs 202, 204 is active and operational. The OLT 210, using methods described above, determines that the farthest ONU has dropped out of the GPON in step 902. The OLT 210 then determines, e.g., remembers from previously stored information, which ONU is now the farthest ONU in step 904. The OLT 210 then determines the zero-distance equalization delay for the new farthest ONU and determines the new zero-distance equalization delay delta in step 906. The OLT 210 then transmits the new zero-distance equalization delay to the new farthest ONU and the new zero-distance equalization delay delta to the rest of the active ONUs in the GPON in step 908 as described above. This is followed by the provisioning by downstream frame N-1 of a quiet window in upstream frame N in step 910. At this point the GPON returns to normal operations in step 912.

The exemplary embodiments described above provide methods and systems for improving the protocol efficiency in PONs. Communications node 1000 can contain a processor 1002 (or multiple processor cores), memory 1004, one or more secondary storage devices 1006 and a communications interface 1008. Processor 1002 is capable of processing instructions in support of performing the duties of an OLT 210. For example, processor 1002 can calculate both the zero-distance equalization delay and the zero-distance equalization delay delta. Also, the memory 1004 could be used to store information relating to each ONU 202, 206 as needed such as, for example, their respective distances from the OLT 210. As such, communications node 1000 is capable of performing the tasks of an OLT 210 as described in the exemplary embodiments herein to augment the capabilities of a PON.

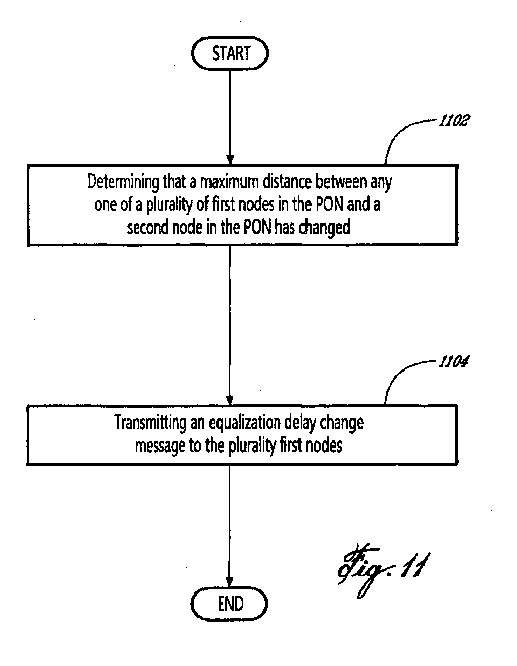

Utilizing the above-described exemplary systems according to exemplary embodiments, a method for controlling equalization delay is shown in the flowchart of Figure 11. Initially a method for controlling equalization delay in a passive optical network (PON) includes: detecting that a maximum distance between any one of a plurality of first nodes in the PON and a second node in the PON has changed in step 1102; and transmitting an equalization delay change message to the plurality of first nodes in step 1104.

The above-described exemplary embodiments are intended to be illustrative in all respects, rather than restrictive, of the present invention. All such variations and modifications are considered to be within the scope of the present invention as defined by the following claims. For example, a message other than the Ranging_Time message 600 could be used to transmit the desired information in a broadcast fashion to the ONUs in a GPON. Additionally, improvements similar to those as described in the exemplary embodiments herein could be used in other types of PONs. No element, act, or instruction used in the description of the present application should be construed as critical or essential to the invention unless explicitly described as such. Also, as used herein, the article "a" is intended to include one or more items.

## Claims

1. A method for controlling equalization delay in a passive optical network, PON, comprising:
determining (1102), by an optical line termination, OLT, (104, 210), that a maximum distance between any one of a plurality of first nodes in said PON and a second node in said PON has changed; and
transmitting (1104) an equalization delay change message to said plurality of first nodes, wherein said equalization delay change message is a single message broadcasted to all of said plurality of first nodes and comprises an equalization delay delta value representing the change between the originally calculated zero-distance equalization delay and the new zero-distance equalization delay based upon a new farthest optical network unit, ONU (112, 118, 202, 206),
wherein said first nodes are ONUs/optical network terminations, ONTs, and said second node is the OLT.

2. The method of claim 1, further comprising:
performing ranging by said second node with each of said plurality of first nodes in said PON; and
determining which one of said plurality of first nodes in said PON is at a farthest distance from said second node.

3. The method of claim 2, further comprising:
calculating (806, 906) a zero-distance equalization delay for said first node in said PON which is at said farthest distance from said second node; and
transmitting (808, 908) said zero-distance equalization delay to said first node in said PON which is at said farthest distance from said second node, if said first node which is at said farthest distance was recently added to said PON.

4. The method of claim 2, wherein said calculated zero-distance equalization delay is equal to a round trip propagation time from said second node to said farthest first node plus a response time for said farthest first node.

5. The method of claim 1, wherein said equalization delay change message includes a first flag notifying each first node in said PON that said message is a broadcast message, said equalization delay delta value which indicates when to implement said equalization delay delta value in said plurality of first nodes.

6. The method of claim 5, wherein said message is a Ranging_Time message.

7. The method of claim 1, wherein said PON is a gigabit capable passive optical network, GPON, (100).

8. An optical line termination, OLT, (210, 1000) for controlling equalization delay in a passive optical network, PON, comprising:
a processor (1002) adapted to determine that a maximum distance between any one of a plurality of first nodes in said PON and the OLT in said PON has changed; and
a communications interface (1008) adapted to transmit an equalization delay change message to said plurality of first nodes, wherein said equalization delay change message is a single message broadcasted to all of said plurality of first nodes and comprises an equalization delay delta value representing the change between the originally calculated zero-distance equalization delay and the new zero-distance equalization delay based upon a new farthest optical network unit, ONU (112, 118, 202, 206),
wherein said first nodes are ONUs/optical network terminations, ONTs.

9. The communications node of claim 8, wherein said communications node is further adapted to perform ranging with each of said plurality of first nodes in the PON and to determine which one of said plurality of first nodes in said PON is at a farthest distance from said communications node.

10. The communications node of claim 9, wherein said processor (1002) is further adapted to calculate a zero-distance equalization delay for said first node in said PON which is at said farthest distance from said second node, further wherein said communications interface (1008) is adapted to transmit said zero-distance equalization delay to said first node in said PON which is at said farthest distance from said communications node, if said first node which is at said farthest distance was recently added to said PON.

11. The communications node of claim 9, wherein said calculated zero-distance equalization delay is equal to a round trip propagation time from said second node to said farthest first node plus a response time for said farthest first node.

12. The communications node of claim 8, wherein said equalization delay change message includes a first flag notifying each first node in said PON that said message is a broadcast message, said equalization delay delta value which indicates when to implement said equalization delay delta value in said plurality of first nodes.

13. The communications node of claim 12, wherein said single message is a Ranging_Time message.

14. The communications node of claim 8, wherein said PON is a gigabit capable passive optical network, GPON, (100).

## Patentansprüche

1. Verfahren zum Steuern einer Ausgleichsverzögerung in einem passiven optischen Netzwerk, PON, umfassend:
Bestimmen (1102), durch eine optische Leitungsterminierung, OLT, (104, 210), dass eine maximale Distanz zwischen irgendeinem einer Vielzahl von ersten Knoten in dem PON und einem zweiten Knoten in dem PON sich änderte; und
Senden (1104) einer Ausgleichsverzögerungsänderungsnachricht zu der Vielzahl von ersten Knoten, wobei die Ausgleichsverzögerungsänderungsnachricht eine einzelne Nachricht ist, die zu allen der Vielzahl von ersten Knoten rundgesendet wird und die einen Ausgleichsverzögerungsdeltawert umfasst, der eine Änderung zwischen der ursprünglich berechneten Nulldistanz-Ausgleichsverzögerung und der neuen Nulldistanz-Ausgleichsverzögerung auf der Grundlage einer neuen, am weitesten abgelegenen optischen Netzwerkeinheit, ONU (112, 118, 202, 206) darstellt,
wobei die ersten Knoten ONUs/optische Netzwerkterminierungen, ONTs, sind und der zweite Knoten die OLT ist.

2. Verfahren gemäß Anspruch 1, weiterhin umfassend:
Durchführen eines Vorgang zur Abstandsbestimmung durch den zweiten Knoten mit jedem der Vielzahl von ersten Knoten in dem PON; und
Bestimmen, welcher der Vielzahl von ersten Knoten in dem PON sich bei einer am weitesten abgelegenen Distanz von dem zweiten Knoten befindet.

3. Verfahren gemäß Anspruch 2, weiterhin umfassend:
Berechnen (806, 906) einer Nulldistanz-Ausgleichsverzögerung für den ersten Knoten in dem PON, der sich bei der am weitesten abgelegenen Distanz von dem zweiten Knoten befindet; und
Senden (808, 908) der Nulldistanz-Ausgleichsverzögerung zu dem ersten Knoten in dem PON, der sich bei der am weitesten abgelegenen Distanz von dem zweiten Knoten befindet, falls der erste Knoten, der sich bei der am weitesten abgelegenen Distanz befindet, unlängst zu dem PON hinzugefügt wurde.

4. Verfahren gemäß Anspruch 2, wobei die berechnete Nulldistanz-Ausgleichsverzögerung gleich einer Umlauf-Laufzeit von dem zweiten Knoten zu dem am weitesten abgelegenen ersten Knoten plus einer Antwortzeit für den am weitesten abgelegenen ersten Knoten ist.

5. Verfahren gemäß Anspruch 1, wobei die Ausgleichsverzögerungsänderungsnachricht ein erstes Flag umfasst, das jedem Knoten in dem PON mitteilt, dass die Nachricht eine Rundsendungsnachricht ist, wobei der Ausgleichsverzögerungsdeltawert angibt, wann der Ausgleichsverzögerungsdeltawert in der Vielzahl von ersten Knoten zu implementieren ist.

6. Verfahren gemäß Anspruch 5, wobei die Nachricht eine Ranging_Time Nachricht ist.

7. Verfahren gemäß Anspruch 1, wobei das PON ein Gigabit-fähiges, passives optisches Netzwerk, GPON, (100) ist.

8. Optische Leitungsterminierung, OLT, (210, 1000) zum Steuern der Ausgleichsverzögerung in einem passiven optischen Netzwerk, PON, umfassend:
einen Prozessor (1002), der eingerichtet ist, um zu bestimmen, dass eine maximale Distanz zwischen irgendeinem einer Vielzahl von ersten Knoten in dem PON und der OLT in dem PON sich änderte; und
eine Kommunikationsschnittstelle (1008), die eingerichtet ist, um eine Ausgleichsverzögerungsänderungsnachricht zu der Vielzahl von ersten Knoten zu senden, wobei die Ausgleichsverzögerungsänderungsnachricht eine einzelne Nachricht ist, die zu allen der Vielzahl von ersten Knoten rundgesendet wird und die einen Ausgleichsverzögerungsdeltawert umfasst, der die Änderung zwischen der ursprünglich berechneten Nulldistanz-Ausgleichsverzögerung und der neuen Nulldistanz-Ausgleichsverzögerung auf der Grundlage einer neuen, am weitesten abgelegenen optischen Netzwerkeinheit, ONU (112, 118, 202, 206) darstellt,
wobei die ersten Knoten ONUs/optische Netzwerkterminierungen, ONTs, sind.

9. Kommunikationsknoten gemäß Anspruch 8, wobei der Kommunikationsknoten weiterhin eingerichtet ist, um einen Vorgang zur Abstandsbestimmung mit jedem der Vielzahl von ersten Knoten in dem PON durchzuführen, und um zu bestimmen, welcher der Vielzahl von ersten Knoten in dem PON sich bei einer am weitesten abgelegenen Distanz von dem Kommunikationsknoten befindet.

10. Kommunikationsknoten gemäß Anspruch 9, wobei der Prozessor (1002) weiterhin eingerichtet ist, um eine Nulldistanz-Ausgleichsverzögerung für den ersten Knoten in dem PON zu berechnen, der sich bei der am weitesten abgelegenen Distanz von dem zweiten Knoten befindet, und wobei weiterhin die Kommunikationsschnittstelle (1008) eingerichtet ist, um die Nulldistanz-Ausgleichsverzögerung zu dem ersten Knoten in dem PON zu senden, der sich bei der am weitesten abgelegenen Distanz von dem Kommunikationsknoten befindet, falls der erste Knoten, der sich bei der am weitesten abgelegenen Distanz befindet, unlängst zu dem PON hinzugefügt wurde.

11. Kommunikationsknoten gemäß Anspruch 9, wobei die berechnete Nulldistanz-Ausgleichsverzögerung gleich einer Umlauf-Laufzeit von dem zweiten Knoten zu dem am weitesten abgelegenen ersten Knoten plus einer Antwortzeit für den am weitesten abgelegenen ersten Knoten ist.

12. Kommunikationsknoten gemäß Anspruch 8, wobei die Ausgleichsverzögerungsänderungsnachricht ein erstes Flag umfasst, das jedem ersten Knoten in dem PON mitteilt, dass die Nachricht eine Rundsendungsnachricht ist, wobei der Ausgleichsverzögerungsdeltawert angibt, wann der Ausgleichsverzögerungsdeltawert in der Vielzahl von ersten Knoten zu implementieren ist.

13. Kommunikationsknoten gemäß Anspruch 12, wobei die einzelne Nachricht eine Ranging_Time Nachricht ist.

14. Kommunikationsknoten gemäß Anspruch 8, wobei das PON ein Gigabit-fähiges, passives optisches Netzwerk, GPON, (100) ist.

## Revendications

1. Procédé pour contrôler un retard d'égalisation dans un réseau optique passif, PON, comprenant:
déterminer (1102), par une terminaison de ligne optique OLT (104,210), qu'une distance maximale entre un quelconque d'une pluralité de premiers noeuds dans ledit PON et un second noeud dans ledit PON a changé ; et
transmettre (1104) un message de changement de retard d'égalisation à ladite pluralité de premiers noeuds, dans lequel ledit message de changement de retard d'égalisation est un message unique diffusé à chacun de ladite pluralité de premier noeuds et comprend une valeur delta de retard d'égalisation représentant le changement entre le retard d'égalisation de distance zéro calculé à l'origine et le nouveau retard d'égalisation de distance zéro sur la base d'une nouvelle unité optique de réseau, ONU (112,118,202,206), la plus distante,
dans lequel lesdits premiers noeuds sont des ONUs/ terminaisons de réseau optique, ONTs, et ledit second noeud est l'OLT.

2. Procédé selon la revendication 1, comprenant en outre:
effectuer un classement par ledit second noeud avec chacun de ladite pluralité de premiers noeuds dans ledit PON ; et
déterminer lequel de ladite pluralité de premiers noeuds dans ledit PON est à une distance la plus éloignée dudit second noeud.

3. Procédé selon la revendication 2, comprenant en outre:
calculer (806,906) un retard d'égalisation de distance zéro pour le dit premier noeud dans ledit PON qui est à ladite distance la plus éloignée dudit second noeud ; et
transmettre (808,908) ledit retard d'égalisation de distance zéro audit premier noeud dans ledit PON qui est à ladite distance le plus éloignée dudit second noeud, si ledit premier noeud qui est à ladite distance plus éloignée a été récemment ajouté audit PON.

4. Procédé selon la revendication 2, dans lequel ledit retard d'égalisation de distance zéro calculé est égal à un temps de propagation aller-retour à partir dudit second noeud vers ledit premier noeud le plus éloigné plus un temps de réponse pour ledit premier noeud le plus éloigné.

5. Procédé selon la revendication 1, dans lequel ledit message de changement de retard d'égalisation inclut un premier fanion notifiant chaque premier noeud dans ledit PON que ledit message est un message de diffusion, ladite valeur delta de retard d'égalisation qui indique quand implémenter ladite valeur delta de retard d'égalisation dans ladite pluralité de premiers noeuds.

6. Procédé selon la revendication 5, dans lequel ledit message est un message Ranging_Time.

7. Procédé selon la revendication 1, dans lequel ledit PON est un réseau optique passif gigabitaire, GPON (100).

8. Terminaison de réseau optique, OLT (210,1000), pour contrôler un retard d'égalisation dans un réseau optique passif PON, comprenant :
un processeur (1002) adapté pour déterminer qu'une distance maximale entre un quelconque d'une pluralité de premiers noeuds dans ledit PON et le OLT dans ledit PON a changé ; et
une interface de communication (1008) adaptée pour transmettre un message de changement de retard d'égalisation à ladite pluralité de premier noeuds, dans lequel ledit message de changement de retard d'égalisation est un message unique diffusé à chacun de ladite pluralité de premier noeuds et comprend une valeur delta de retard d'égalisation représentant le changement entre le retard d'égalisation de distance zéro calculé à l'origine et le nouveau retard d'égalisation de distance zéro sur la base d'une nouvelle unité optique de réseau, ONU (112,118,202,206), la plus distante,
dans lequel lesdits premiers noeuds sont des ONUs/ terminaisons de réseau optique, ONTs.

9. Noeud de communication selon la revendication 8, dans lequel ledit noeud de communication est en outre adapté pour effectuer un classement avec chacun de ladite pluralité de premiers noeuds dans le PON et déterminer lequel de ladite pluralité de premiers noeuds dans ledit PON est à une distance la plus éloignée dudit noeud de communication.

10. Noeud de communication selon la revendication 9, dans lequel ledit processeur (1002) est en outre adapté pour calculer un retard d'égalisation de distance zéro pour ledit premier noeud dans ledit PON qui est à ladite distance la plus éloignée dudit second noeud, dans lequel en outre ladite interface de communication (1008) est adaptée pour transmettre ledit retard d'égalisation de distance zéro audit premier noeud dans ledit PON qui est à ladite distance la plus éloignée dudit noeud de communication, si ledit premier noeud qui est à ladite distance la plus éloignée été récemment ajouté audit PON.

11. Noeud de communication selon la revendication 9, dans lequel ledit retard d'égalisation de distance zéro calculé est égal à un temps de propagation aller-retour à partir dudit second noeud vers ledit premier noeud le plus éloigné plus un temps de réponse pour ledit premier noeud le plus éloigné.

12. Noeud de communication selon la revendication 8, dans lequel ledit message de changement de retard d'égalisation inclut un premier fanion notifiant chaque premier noeud dans ledit PON que ledit message est un message de diffusion, ladite valeur delta de retard d'égalisation qui indique quand implémenter ladite valeur delta de retard d'égalisation dans ladite pluralité de premiers noeuds.

13. Noeud de communication selon la revendication 12, dans lequel ledit message unique est un message Ranging time.

14. Noeud de communication selon la revendication 8, dans lequel ledit PON est un réseau optique passif gigabitaire, GPON (100).
